# EUROPEAN PATENT SPECIFICATION

(11) **EP 3 127 384 B1**
(45) Date of publication and mention of the grant of the patent: **05.09.2018**
(21) Application number: 14716273.9
(22) Date of filing: 04.04.2014
(51) Int. Cl.: H04W 72/04

(54) **INTERFERENCE AWARE CONTROL SIGNALLING**
INTERFERENZBEWUSSTE STEUERUNGSSIGNALISIERUNG
SIGNALISATION DE COMMANDE SENSIBLE AU BROUILLAGE

(43) Date of publication of application: 08.02.2017
(73) Proprietor: Nokia Solutions and Networks Oy, 02610 Espoo (FI)
(72) Inventor: HARJULA, Ilkka, FI-90550 Oulu (FI); TIIROLA, Esa Tapani, FI-90450 Kempele (FI); PAJUKOSKI, Kari Pekka, FI-90240 Oulu (FI); LÄHETKANGAS, Eeva, FI-90240 Oulu (FI)
(74) Representative: Nokia EPO representatives
(86) International application number: PCT/EP2014/056774
(87) International publication number: WO 2015/149861

(56) References cited:
- WO-A2-2008/070518
- WO-A2-2008/156495
- MOGENSEN PREBEN ET AL: "5G small cell optimized radio design", 2013 IEEE GLOBECOM WORKSHOPS (GC WKSHPS), IEEE, 9 December 2013 (2013-12-09), pages 111-116, XP032599888, DOI: 10.1109/GLOCOMW.2013.6824971 [retrieved on 2014-06-03]

## Description

### TECHNICAL FIELD:

The teachings in accordance with exemplary embodiments of this invention relate generally to control signaling or control signal arrangement and, more specifically, relate to interference aware control signaling or control signal arrangements in a 4G or 5G system.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

WO 2008/156495 discloses systems and methodologies are described that facil-itate multiplexing control data values over a single physical control channel at least in part by dividing the control channel into one or more logical channels. The physical control channel can have a cor-responding Walsh space for transmitting a number of bits, or repre-sentations thereof, and the Walsh space can be divided among the logical control channels. Additionally, the logical control channels and/or physical channel can be scrambled according to an identifier of a mobile device (such as MAC ID) to differentiate the data on the channel. Furthermore, a sector identifier can be used to scramble the data where the sector is ascertainable.

Certain abbreviations that may be found in the description and/or in the Figures are herewith defined as follows:
- BS: base station
- CPS: cyber physical systems
- CTS: clear to send
- D2D: device-to-device communication
- DL: downlink
- eNB: base station/access device
- IA: interference aware
- IAS: interference aware scheduling
- MIMO: multiple input multiple output
- MTC: machine-type communications
- RA: rank adaptation
- RACH: random access channel
- RTS: request to send
- Rx: receive
- SR: scheduling request
- TDD: time division duplexing
- Tx: transmit
- UDN: ultra dense network
- UL: uplink

One of the drivers for a new 5G system or improved 4G system design is a foreseen need for new radio access technology for ultra-dense deployment scenarios. In ultra-dense deployments, co-channel interference from inside of a network can be a serious limiting factor for higher capacity. Different interference management techniques, both centralized and de-centralized, are being studied for 5G systems. Exemplary embodiments of the invention work to address at least some of these issues using a unique control signal arrangement to facilitate interference aware scheduling in framed TDD system.

### SUMMARY:

The object of the present invention is achieved by the features of the appended independent claims.

In an exemplary aspect of the invention there is a method comprising, dividing, by a network device, a control part of a physical domain resource corresponding to one or more subframes into logical resources; reserving a first portion of the logical resources for control signaling; reserving a second portion of the logical resources for a transmission request; and reserving a third portion of the logical resources for interference information signaling from receivers of the at least one transmission request.

An aspect provides an apparatus comprising means for carrying out the method above.

An aspect provides a computer program product for a computer, comprising software code portions for performing the steps of the method above, when said product is run on the computer.

In an exemplary aspect of the invention there is a method comprising, controlling , by a user device, receiving a control part of a physical domain resource corresponding to one or more subframes, wherein the control part is divided into logical resources, wherein a first portion of the logical resources is reserved for control signaling, wherein a second portion of the logical resources is reserved for a transmission request, and wherein a third portion of the logical resources is reserved for interference information signaling from receivers of the at least one transmission request.

An aspect provides an apparatus comprising means for carrying out the method above.

An aspect provides a computer program product for a computer, comprising software code portions for performing the steps of the method above, when said product is run on the computer.

### BRIEF DESCRIPTION OF THE DRAWINGS:

The foregoing and other aspects of embodiments of this invention are made more evident in the following Detailed Description, when read in conjunction with the attached Drawing Figures, wherein:
Figure 1 shows disadvantages of a 5G frame;
Figure 2 shows a simplified block diagram of various devices and apparatus that are suitable for use in practicing exemplary embodiments of this invention;
Figure 3 shows a proposed multiplexing structure with three logical control sub-parts;
Figure 4 shows IAS control and data spanning several subframes;
Figure 5 shows an example communication with three control sub-parts in the beginning of the frame;
Figure 6 shows an example of control where UL/DL and IAS TX/Rx control alternate from subframe to another;
Figure 7 shows another example of control where UL/DL and IAS TX/Rx control alternate from subframe to another; and
Figures 8A and 8B each show a method in accordance with the exemplary embodiments which may be performed by an apparatus.

### DETAILED DESCRIPTION:

In accordance with embodiments of this invention, there is focus on interference management methods where the network nodes exchange information about the interference situation that they are experiencing, and the scheduling and/or transmission parameter decisions are made in such a manner that it takes into account the overall interference situation in the network.

One problem of the current art due to limitations, such as half-duplex limitations, is that with a fixed DL/UL division in the control part the BSs and the UEs can't hear each other. A more detailed example of this problem with a proposed 5G frame structure is discussed below. Another issue is that the RTS/CTS protocol was designed in view of a hidden terminal problem with the assumption that all nodes have the same transmission ranges. However, this does not solve the hidden terminal problem. The RTS/CTS frames can cause a new problem called the exposed terminal problem in which a wireless node that is nearby, but is associated with another access point, overhears the exchange and then is signaled to backoff and cease transmitting for the time.

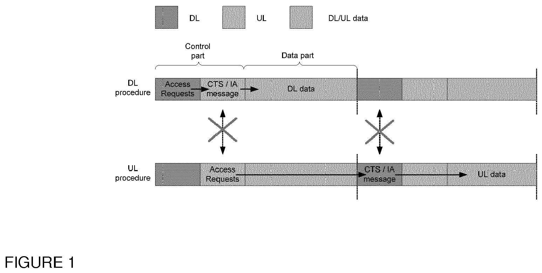

Figure 1 illustrates a proposed 5G frame structure. As shown in Figure 1 there is a 5G frame structure with a fixed control and data structure which has been proposed. In that frame structure, a subframe begins with a DL control part which is followed by UL control part, and rest of the subframe is composed of data part that can be either DL or UL transmission. If we apply a subframe structure with fixed DL and UL control parts with distributed scheduling or MIMO, following procedure of exchanging information can be constructed:

For the DL, the procedure is as follows: BS sends RTS/Access Requests in DL control part, and the UEs reply in the UL part with CTS/IA messages. The data is transmitted in the following data part. In practice, the UEs hear the transmissions of the BSs and there is no intra-cell interference but all the interference originates from the surrounding cells. However, if there is a UL transmission in the other cell, the UEs can't hear the Access Requests from the UEs as they are happening during the fixed UL control part. This is against the Interference Aware Scheduling principle, as the UEs are supposed to measure all the interference during the Access Request period.

For the UL, the procedure is as follows: UEs send their RTS/Access Requests in UL control part, assuming that there are no Access Request send by the BS in the preceding DL part. However, the CTS/IA message is sent back by the BS in the beginning of the next subframe in DL control part, and the data transmission can be started in the data part of the next subframe. As there can be several UEs in the serving area of the BS there is a probability that several UEs are competing for the same resources. According to IAS, the BS does not send scheduling decisions to UEs, but the scheduling decisions are made by the UEs. If there is a DL transmission in the adjacent cell, the UEs can hear the Access Requests, but are not capable of hearing the CTS / IA messages from the neighboring UEs.

A frame structure that has been proposed for IAS, where the control part has only IAS Tx and IAS Rx parts, has disadvantage of completely detaching the BS from individual UEs (and D2D groups), as there are no dedicated DL control resources. In addition, there are no UL control resources either, so all the UEs may be detached from the BS.

No distributed interference management like RTS/CTS type of mechanism is supported in LTE(-A). Challenges in designing a frame structure that is compatible with distributed interference aware scheduling (IAS) and rank adaptation (RA) type of algorithms for half-duplex TDD system includes that three conditions should be met:
**1.)** While the potential transmitters broadcast their Access Request / request to send (RTS) messages, all potential receivers (in the same or neighboring cells) must hear them, and be able to measure the interference they are causing (This is not dependent on whether the receiver is a BS or UE);
**2.)** While the receivers broadcast clear to send (CTS)/IAS message, all potential transmitters must be able to hear and decode these messages (This is not dependent on whether the receiver is a BS or UE); and
**3.)** eNodeB should have a control connection to all devices in the cell.

There is a need to provide a mechanism to control multiuse interference and collisions in a synchronized system, wherein a receiver informs a transmitter of the cost of interference to be caused, if a certain resource is taken into use (interference pricing). Some examples of adaptable techniques are RTS/CTS, IAS and RA which are explained in more detail below.

Embodiments of this invention relate to the distributed interference management and it's applicable to methods known as RTS/CTS (Request to Send / Clear to Send) mechanism. The RTS/CTS protocol was designed in view of a hidden terminal problem with the assumption that all nodes have the same transmission ranges. However, this does not solve the hidden terminal problem. The RTS/CTS frames can cause a new problem called the exposed terminal problem in which a wireless node that is nearby, but is associated with another access point, overhears the exchange and then is signaled to backoff and cease transmitting for the time.

An exemplary embodiment of the invention focuses on interference management methods where the network nodes exchange information about the interference situation that they are experiencing, and the scheduling and/or transmission parameter decisions are made in such a manner that it takes into account the overall interference situation in the network. In accordance with the exemplary embodiment of the invention all the transmitters are able to receive all the interference aware related messages.

In accordance with an exemplary embodiment, physical domain resources of at least one subframe are divided at least into a control and data parts. The control part is further divided into control sub-parts. In the proposed invention, there are three different logical control sub-parts that can be mapped to the physical control part in various ways. In accordance with the exemplary embodiment of the invention a physical control portion of at least one subframe may be mapped with logical control sub-parts which may be used in a flexible manner for the distributed scheduling. These operations are described in more detail below.

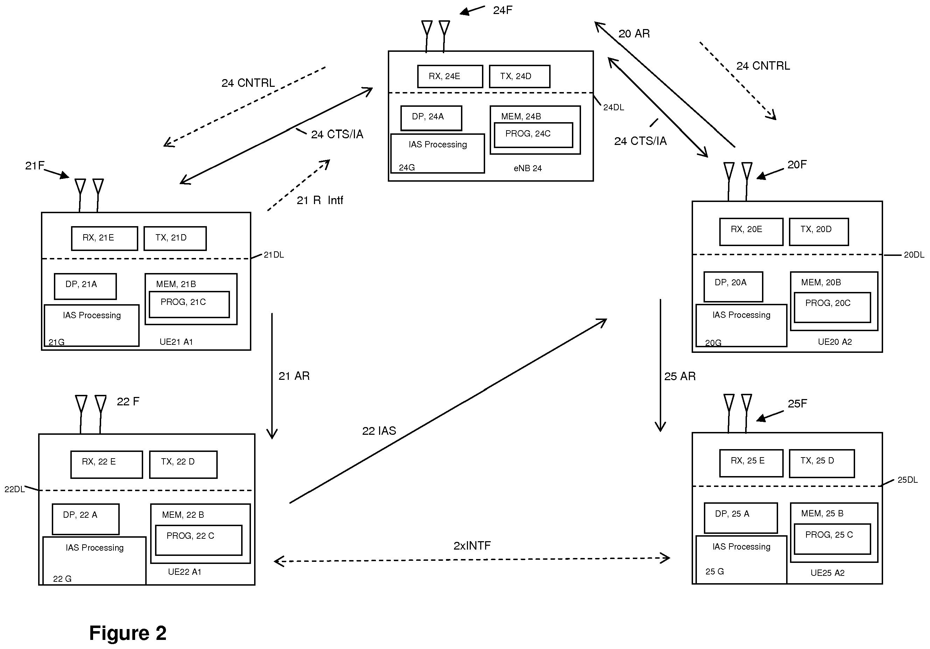

An exemplary embodiment of the invention will now be described with reference to the example shown in Figure 2. Figure 2 illustrates a simplified block diagram of various electronic devices and apparatus that are suitable for use in practicing exemplary embodiments of this invention. In Figure 2 eNB 24 may be a base station or other network access node. The eNB 24 is adapted for communication over at least wireless links (not specifically shown) with mobile apparatuses, such as mobile terminals, UEs or user devices UE20 A2, UE21 A1, UE22 A1, and/or UE25 A2. The eNB 24 may be embodied as a macro eNodeB (a base station of an E-UTRAN system and/or 5G system), a WLAN access point, a femto eNodeB, or other type of base stations or access points adapted to use the exemplary IAS frame structure as discussed herein.

As illustrated in Figure 2, the eNB 24 includes its own processing means such as at least one data processor (DP) 24A, storing means such as at least one computer-readable memory (MEM) 24B storing at least one computer program (PROG) 24C, and communicating means such as a transmitter TX 24D and a receiver RX 24E for bidirectional wireless communications with user devices UE20 A2, UE21 A1, UE22 A1, and/or UE25 A2 via its antennas 24F. The eNB 24 stores at block 24G in its local MEM 24B regarding the IAS algorithm processing in accordance with the exemplary embodiment.

The UE 20 A2 includes processing means or at least one data processor (DP) 20A, storing means or at least one computer-readable memory (MEM) 20B for storing at least one computer program (PROG) 20C. The UE 20 A2 may also include communicating means or a transmitter TX 20D and/or a receiver RX 20E for wireless communications with the eNB 24 via one or more antennas 20F. The RX 20E and the TX 20D are each shown as being embodied in a radio-frequency front end chip, which is one non-limiting embodiment. The first user device 20 may store in the MEM 20B at block 20G computer program code for at least the exemplary IAS processing and mapping as discussed herein.

The UE 21 A1 correspondingly includes processing means or at least one data processor (DP) 21A, storing means or at least one computer-readable memory (MEM) 21B for storing at least one computer program (PROG) 21C. The UE 21 A1 may also include communicating means such as a transmitter TX 21D and/or a receiver RX 21E for wireless communications with the first user device 20 as well as the other apparatus of Figure 2 via one or more antennas 21F. The UE 21 A1 may store in its local MEM 21B at block 21G computer program code for at least the exemplary IAS processing, for reading the exemplary IAS frame structure it receives, and to utilize that IAS information such as for its own communications.

The UE 22 A1 includes processing means or at least one data processor (DP) 22A, storing means or at least one computer-readable memory (MEM) 22B for storing at least one computer program (PROG) 22C. The UE 22 A1 may also comprise communicating means for communication with the other devices of Figure 2. The UE 22 A1 may also store in its local MEM 22B at block 22G the computer program code for at least the exemplary IAS processing and for communicating the exemplary IAS frame structure.

The UE 25 A2 includes processing means or at least one data processor (DP) 25A, storing means or at least one computer-readable memory (MEM) 25B for storing at least one computer program (PROG) 25C. The UE 25 may also include communicating means for communication with the other devices of Figure 2. The UE 25 A2 1 may also store in its local MEM 22B at block 22G the computer program code for at least the exemplary IAS processing and for communicating the exemplary IAS frame structure.

In accordance with an exemplary embodiment of the invention, measuring and/or determining and/or mapping the interference levels may be based on information detected by the UE20 A2, UE21 A1, UE22 A1, UE25 A2, and eNB 24 or information received via the antenna 20F, 21F, 22F, 25F and/or 24F as well as associated receivers RX 20E, 21E, 22E, 25E, and 24E. Such information from any one or more of the user equipment UE20 A2, UE21 A1, UE22 A1, UE25 A2 and/or base station eNB 24. At least one of the PROGs 20C, 21C, 22C, 25C, and/or 24C in the respective device UE20 A2, UE21 A1, UE22 A1, UE25 A2 and/or eNB 24 is assumed to include program instructions that, when executed by the associated DP 20A, 21A, 22A, 25A, and 24A enable the device to operate in accordance with exemplary embodiments of this invention to perform the operations as detailed herein. Blocks 20G, 21G, 22G, 25G, and 24G summarize different results from executing different tangibly stored software to implement certain aspects of these teachings. In these regards the exemplary embodiment of this invention may be implemented at least in part by computer software stored on the MEM 20B, 21B, 22B, 25B, and/or 24B which is respectively executable by DP 20A, 21A, 22A, 25A, and 24A, or by hardware, or by a combination of tangibly stored software and hardware (and tangibly stored firmware).

Electronic devices implementing these aspects of the invention need not be the entire devices as depicted at Figure 2, but the exemplary embodiment may be implemented by one or more components of same such as the above described tangibly stored software, hardware, firmware and data processor.

Various examples of the computer readable MEMs 20B, 21B, 22B, 25B, and 24B include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DPs 20A, 21A, 22A, 25A, and 24A include but are not limited to general purpose computers, special purpose computers, microprocessors, digital signal processors (DSPs) and multi-core processors.

It is noted that the communications and/or operations as described below for Figure 2 are non-limiting to exemplary embodiments of the invention. The devices and the related operations are merely illustrative of devices for use in practicing exemplary embodiments of this invention. Any of these operations can be performed using any suitable device including any of the devices shown in Figure 2. Further, the operations as described below may be performed in a different order and/or by different devices than what is described.

In addition, the dashed lines 24DL, 20DL, 21DL, 22DL, and 25DL of Figure 2 indicate that the radio parts of the eNB 24, UE20 A2, UE21 A1, UE 22 A1, and/or the UE 25 A2 are optional and may be separate from at least a processor and IAS processing program instructions of the eNB 24, UE20 A2, UE21 A1, UE 22 A1, and/or the UE 25 A2 of Figure 2. Each of the RX 24E, TX 24D, and antenna 24F; the RX20E, TX20D and antenna 20F; the RX21E, TX21D and antenna 21F; the RX22E, TX22D and antenna 22F; and/or the RX25E, TX25D and antenna 25F, of the eNB 24, UE 20 A2, UE21 A1, UE 22 A1, and/or UE 25 A2, respectively, are optional to the operations in accordance with exemplary embodiment of the invention. In accordance with a non-limiting exemplary embodiment of the invention the eNB 24, UE 20 A2, UE21 A1, UE 22 A1, and/or UE 25 A2 may be coupled to external radio parts for sending or receiving signaling via circuitry such as integrated circuitry.

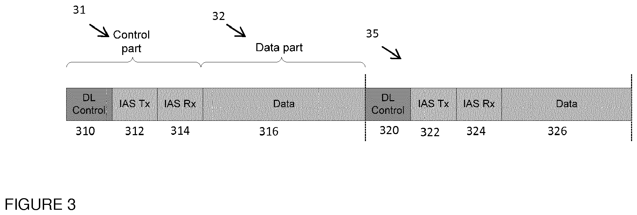

In accordance with an exemplary embodiment of the invention as shown in Figure 2 there is provided a method including dividing a control part of a physical domain resource corresponding to one or more subframes into logical resources; reserving a first portion of the logical resources for control signaling; reserving a second portion of the logical resources for a transmission request; reserving a third portion of the logical resources for interference information; and communicating the one or more subframes with at least one network node of a communication network. Each of exemplary embodiments of the invention as described below with regards to at least Figures 3, 4, 5, 6, 7, and 8 will utilize at least these exemplary aspects of the invention.

As will be discussed in more detail below, the portioning the control part of the one or more subframes facilitates determining, by a network device, an interference level associated with an indication of interference from each of more than one user equipment. Then, based on at least the interference levels communicated with the divided control part there is determining control signalling for user equipment of the more than one user equipment of a communication network. In accordance with exemplary embodiments, with regards to Figure 2, the eNB 24 may process with a scheduling (e.g. IAS) processing device 24G interference levels identified by the eNB 24. The scheduling processing device 24G assists in performing the exemplary IAS algorithm processing. The exemplary IAS algorithm processing is using at least program instructions 24C stored on the memory 24B and executed by the processor 24C. In accordance with exemplary embodiments of the invention the measuring and/or determining the interference levels may be based on information detected by the eNB 24 or information received via the antenna 24F and Rx 24E, such as information from any one or more of the user equipment UE20 A2, UE21 A1, UE22 A1, and/or UE25 A2.

In one implementation, the eNB 24 would function to receive information about a total received interference power, received signal power, and average throughput from the user devices UE20 A2, UE21 A1, UE22 A1, and/or UE25 A2. Then the eNB 24 may combine this information with other information, such as estimated channel gain from the eNB 24 to the user devices UE20 A2, UE21 A1, UE22 A1, and/or UE25 A2, in order to estimate the throughput degradation that its own transmission would cause to the user devices. In accordance with exemplary embodiments the eNB 24 may relay IAS information using the exemplary IAS frame structure signaling and use this signaling to perform distributed interference management in a communication network.

In accordance with an exemplary embodiment of the invention as shown in Figure 3 there is illustrated one implementation of this arrangement where the downlink control and interference aware scheduling which may occur during one subframe. In accordance with an exemplary embodiment of the invention the portioning in accordance with an exemplary embodiment of the invention as shown in Figure 3 includes portioning a first portion, a second portion and a third portion located in a same subframe of the one or more subframes, and wherein the first portion is used for downlink control signaling.

Figure 3 shows a proposed multiplexing structure with three logical control sub-parts or portions. As shown in Figure 3 a base station, server, host or node, such as the the eNB 24, maps in a physical control part 310 at least one subframe a first logical control sub-part reserved for DL control. In addition, the eNB 24 maps a second logical control sub-part (IAS Tx) and a third logical control sub-part (IAS Rx) for communications regarding distributed scheduling control. In accordance with exemplary embodiments of the invention, information such as interference information is communicated in these sub-parts in the single subframe such that it can be received by at least one device, such as user device or UE. In accordance with exemplary embodiments the information of the sub-parts provides information, such as information regarding interference levels associated with RTS requests, can be used by the eNB 24 to determine the exemplary mapping and control signalling.

As shown in Figure 3 there are three control sub-parts in the physical control part 31 at the beginning of a subframe. In accordance with exemplary embodiments of the invention a physical control may be mapped with logical control sub-parts which may be used in a flexible manner for the distributed scheduling. In accordance with exemplary embodiments of the invention as shown in Figure 3, there is a control sub-part 310 reserved for (e.g. downlink) communications followed by two control sub-parts (e.g., IAS Tx 312 and IAS Rx 314) that are used to transmit access request and/or interference information, such as RTS/Access Request and CTS/IA messages, respectively. In accordance with an exemplary embodiment of the invention, a control part 31 of a physical domain resource of the subframe structure as shown in Figure 3 is divided into logical resources using at least devices of Figure 2 including the eNB 24 using the DP 24A, PROG 24C, and MEM 24B of the eNB 24, as shown in Figure 2. In accordance with exemplary embodiments of the invention such dividing and/or portioning, as shown in Figure 3, may be used to reserve a first portion or sub-part reserved for (downlink) communication, a second portion or sub-part to signal an access request, and a third portion or sub-part to signal interference aware information of the transmission request from a receiver of an access request. As shown in Figure 3, the mapping of the sub-parts in a subsequent subframe is similar.

In accordance with the exemplary embodiment all the devices including the eNB 24, UE20 A2, UE21 A1, UE22 A1, and/or UE25 A2 that may submit transmission requests (such as RTS/Access Requests) do so in the second logical control sub-part 312. In accordance with the exemplary embodiment the third logical control sub-part 314 is reserved for interference messages (such as CTS/IA messages) responses from the receivers of these transmission requests. Exemplary embodiments of the invention provide at least an algorithm and/or method to map subframes for the signaling mapping for use in determining control signaling for user equipment in a distributed fashion.

Further, as shown in Figure 3 a control part in the subframe may be constructed by Always DL, IAS Tx and IAS Rx parts. In this arrangement the eNB 24 is able to reach all the UE20 A2, UE21 A1, UE22 A1, and/or UE25 A2 regardless of their buffer status. In the Always DL part, the eNB 24 can, for example:
a) Control the cell operation, e.g. allow or deny D2D operation in the cell, or reserve only part of the frequency resources for the D2D communications Furthermore, it can be used to convey synchronization signals, most critical system information, paging, etc.
b) Assign priorities to the users. If eNB 24 is not transmitting during distributed scheduling, it can hear both the Access Requests and IAS messages sent by the nodes. By monitoring the data traffic, it can also deduce whether or not some of the nodes are blocked from sending data because of the interference situation, or if there is a half-duplex collision between two nodes trying to simultaneously send RTS/Access Request to each other. In the situation, where eNB 24 participates the interference aware scheduling by sending Access Requests, it can't collect data from Access Requests as it can't hear them. However, it is possible for the eNB 24 to send scheduling information in the Always downlink part, so it is not necessary for it to participate to the distributed scheduling.
c) It is also possible for the eNB 24 to send the CTS/IA message during the Always DL part.

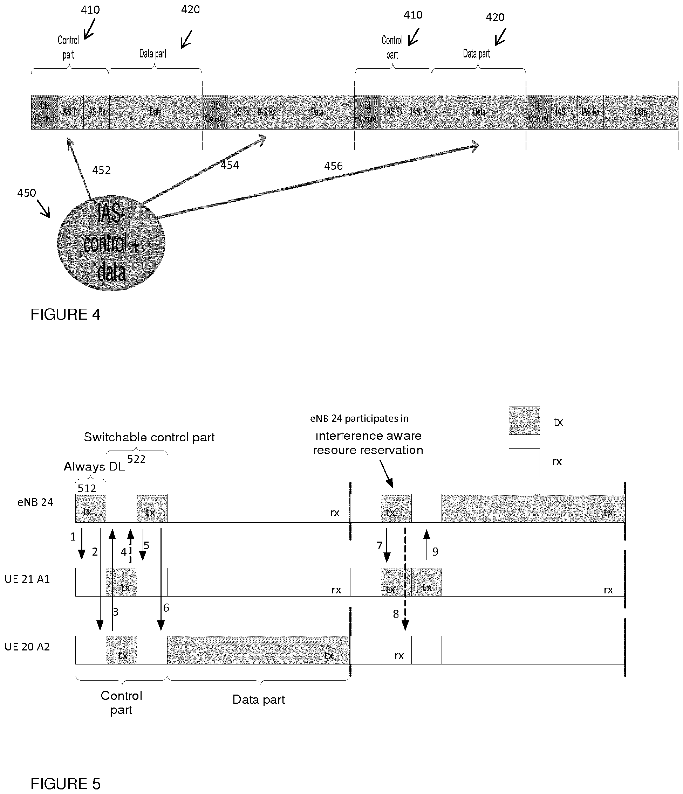

It is noted that in Figure 3 there is shown a second subframe 35 with operations mapped to a first logical control sub-part 320, a second logical control sub-part 322, and a third logical control sub-part 324 of the second subframe. The first and second subframe of Figure 3 also includes a data part 316 and 326, respectively. As indicated above, the eNB 24 may map in multiple subframes a second logical control sub-part and a third logical control sub-part in a flexible or alternative manner for the distributed scheduling. This mapping in accordance with exemplary embodiments may be performed using more than one subframe. Figure 4 illustrates IAS control and data signalling sub-parts mapped over several subframes.

**In accordance with another** example **of the invention as shown in** **Figure 4** a control part 410 of a physical domain resource of the subframe structure may be mapped or divided over more than one subframe with a device as shown in Figure 2. In accordance with exemplary embodiments of the invention such dividing, as shown in Figure 4, can map interference aware (IAS) control and data signalling over several subframes, thus easing the processing time requirements. Figure 4 shows IAS control and data spanning several subframes. For example, in regards to Figure 4 a first subframe includes a control part 410 and a data part 420. The control part 410 of a first subframe is mapped to include always DL control, IAS Tx and IAS Rx parts. Similarly, the control part 410 of a subsequent subframe is similarly mapped to include always DL, IAS Tx and IAS Rx parts. This kind of arrangement as shown with Figure 4 has a benefit that eNB 24 can also send RTS / Access Request during the DL Control part. In accordance with exemplary embodiments of the invention in this kind of arrangement the IAS scheduling process 450 spans over multiple subframes as indicated by arrows 452, 454, and 456. In accordance with exemplary embodiments the eNB 24 may use the sub-parts of these different subframes to participate in RTS and/or access requests in addition to receiving interference aware signalling from receivers of the request. As such the eNB 24 may initiate thorough processing of interference information to create the distributed control signalling in accordance with the example.

**In accordance with another** example **of the invention as shown in** **Figure 5****,** the IAS processing including dividing a control part of a physical domain resource corresponding to one or more subframes into logical resources may include that there are two control sub-parts in the beginning of the subframe, alternating via patterns. Figure 5 shows an example communication with three control sub-parts in the beginning of the frame, and an example of communication with three sub-parts is depicted therein. This arrangement is suitable to LTE enhanced interference mitigation & traffic adaptation (eIMTA) frame structure, wherein the frame comprises flexible time slots (switchable parts) and fixed time slots (e.g. always DL). The elMTA is designed to provide dynamic and flexible resource configuration for TDD in consideration of traffic load (dynamic switching between UL/DL). With eIMTA, each eNodeB (eNB 24) can decide the UL/DL pattern itself depending on the load.

In the first subframe of Figure 5 for example, eNB 24 sends (Fig. 5, 1 and 2) control message (Fig. 2, 24 CNTRL) in the beginning of the subframe that can be heard both UE21 A1 and UE20 A2. Then, in the second control sub-part UE 20 A2 wishes to send data to eNB 24, and sends RTS/Access Request (Fig. 2, AR 20; Fig. 5, 3) to the eNB 24. At the same time, UE 21 A1 wishes to communicate with another device UE 22 A1, and sends RTS/Access Request (21 AR) to it. It has to be noted that eNB 24 can also hear (see 21 R intf of Fig. 2 and #4 of Fig. 5) the RTS/Access Request by UE 21 A1, although it is not intended directly to it. In accordance with exemplary embodiments of the invention a base station such as the eNB 24 receives indications of RTS/Access Requests from any or all of the UE 21 A1 and UE 20 A2. In accordance with exemplary embodiments this provides at least a processor and instructions for the base station to make necessary computations for the control signaling mapped to subframes.

In accordance with the example enabling switchable Tx/Rx sub-parts for the IAS embodiments is provided as disclosed herein. Thus, if someone transmits an access request, it uses the first slot to transmit, and the receiver can use the second slot for a resulting CTS/IA message to the eNB 24.

Further, in accordance with the example, as shown in Figure 5 the control signaling may be determined based on at least indications of received signal power and experienced interference as provided to the base station. The eNB sends a CTS/IA message (Fig. 2, 24 CTS/IA; and Fig. 5, #s 5 and 6) that is received by both UE 21 A1 and UE 20 A2. Using the CTS/IA message from the eNB 24 the UE 21 A1 and UE 20 A2 can now make decisions if they will send data or not, or adjust their transmission ranks or adapt their transmissions otherwise. In a non-limiting example case, UE 21 A1 decides not to transmit, because it would have interfered too much with UE 20 A2 transmission.

As shown in Figure 5 the eNB can participate in the IAS communication in the second subframe. In the first communication sub-part, it does not send anything, although it could. In the second sub-part, the eNB 24 sends CTS/IA message (Fig. 5, #7) to UE 21 A1. This is also heard by UE 24 A2 as indicated with the dashed line #8. The UE 21 A1 responds in the third control sub-part by sending CTS/IA message to eNB 24 (Fig. 5, #9). In a non-limiting example, UE 20 A2 is not receiving or transmitting, so it does not send anything in any of the control sub-parts. In accordance with the example as shown in Figure 5 the eNB 24 may itself participate in sending signaling such as access requests to the UEs, and in turn receive interference indications from the UEs which receive the signaling from the eNB 24. In accordance with the example this provides further IAS processing data for the base station to make necessary interference related computations for the control signaling mapped to subframes.

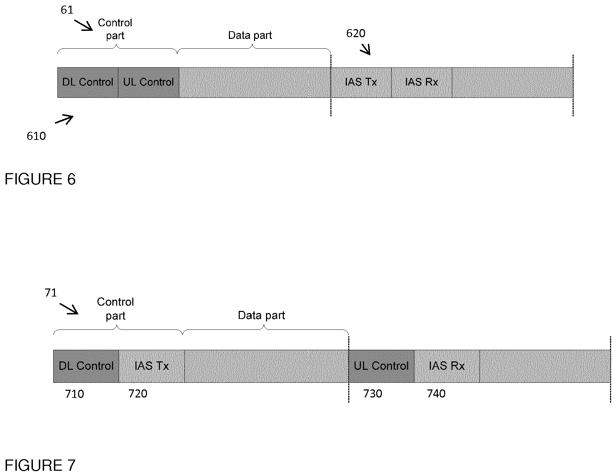

**In accordance with another** example **of the invention as shown in** **Figure 6****,** the IAS processing including dividing a control part of a physical domain resource corresponding to one or more subframes into logical resources, as described above with regards to operations of a device as shown in Figure 2, can include that every other subframe the control part is mapped as UL/DL control 610, and every other subframe the control part is mapped as IAS Tx/Rx control 620. Figure 6 shows an example of control where UL/DL and IAS TX/Rx control alternate from one subframe to another. Thus, exemplary embodiments of the invention regarding IAS may at least be utilized at least in the IAS Tx/Rx control 620 of every other frame. This arrangement is suitable to a frame structure possibly to be used in 5G implementation. This implementation has an advantage that the overhead that is caused by reserving control opportunities for DL can be reduced, as the mapping of the different types of control parts can be varied for, or included in, alternate subframes.

**Figure 7** **shows another** example **of the invention.** Figure 7 shows another example of dividing a control control part of a physical domain resource with regards to operations of a device as shown in Figure 2 where UL/DL and IAS TX/Rx control alternate from subframe to another. As shown in Figure 7, the first control sub-part 710/730 of each subframe is mapped for downlink (DL) or uplink (UL) signalling, and the second control sub-part 720/740 of each frame is mapped, possibly alternatively, for IAS Tx or Rx signalling.

**In accordance with another** example **of the invention** fixed DL and UL control subparts may be mapped in the control part. This would restrict the IAS Tx to UEs and have the IAS Tx in the reserved UL control part. The transmission opportunity for the IAS Rx control part can be reserved in the data part.

In accordance with an example of the invention, operations of a device as shown in Figure 2 can operate to enable switchable Tx/Rx sub-parts, and alternate in different subframes, for the IAS embodiments as disclosed herein. Thus, as similarly stated above, if someone transmits an access request, it uses the first slot to transmit, and the receiver can use the second slot for a resulting CTS/IA message to the eNB 24.

**In accordance with another** example **of the invention** frame structure follows proposed 5G frame structure with UL/DL control part and data part, with an exception that part of the data resources is reserved for IAS Tx and IAS Rx control signaling either in time or in frequency. This implementation has an advantage that it requires no modifications to the previously proposed 5G frame structure. This arrangement is feasible in the scenarios where D2D communications is not the dominant form of the communications.

**In accordance with another** example **of the invention the mapping operations of a device as shown in at least** **Figure 2** **may include using interference information obtained from D2D communications.** Figure 2 illustrates this example the UE21 A1 and the UE20 A2 are in different areas (e.g., A1 and A2). In these areas the UE21 A1 and the UE20 A2 may be performing D2D communications with the UE22 A1 and the UE25 A2, respectively. As in similar operations discussed above, the UE21 A1 and/or the UE20 A2 may send Access Request (e.g., RTS messages) 21AR and 25 AR to the UE22 A1 and UE25 A2, respectively, for D2D communications. In this case the UE22 A1 and the UE25 A2 which are the receivers of the access requests 21AR and 25 AR, respectively, receive both desired signaling as well as indications of interfering signals i.e., 2xlNTF from the other simultaneously. These interfering signals 2xlNTF may be based on interference for the access requests 21AR and 25 AR and/or other detected interference. Then the receivers, in this case the UE22 A1 and/or the UE25 A2, transmit CTS/IAS messages such as 22 IAS to the potential transmitters, in this case UE21 A1, UE20 A2, and/or eNB 24. In this example all these devices are able to receive the CTS/IAS messages.

Further, some of the various features of the above non-limiting examples may be used to advantage without the corresponding use of other described features. The foregoing description should therefore be considered as merely illustrative of the principles, teachings and exemplary embodiments of this invention, and not in limitation thereof.

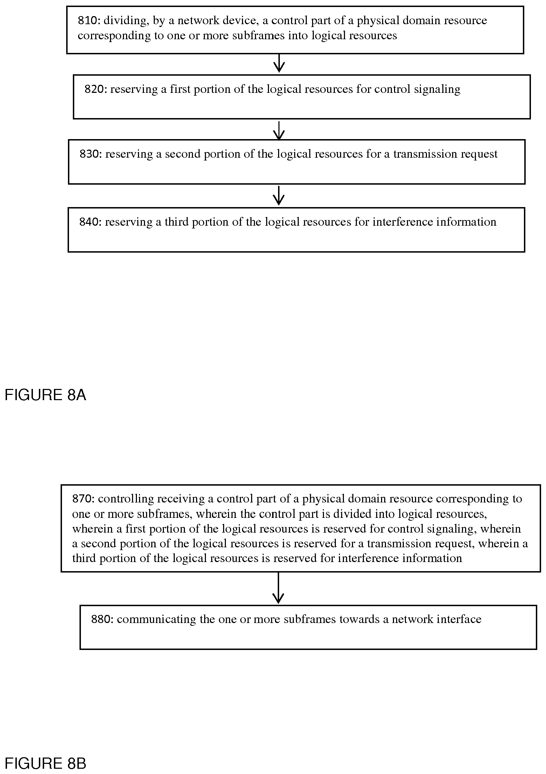

Figures 8A and 8B each shows a method in accordance with exemplary embodiments which may be performed by an apparatus.

Figure 8A illustrates operations which may be performed by a network device such as, but not limited to, a base station or node (e.g., the eNB 24 as in Fig. 2). As shown in step 810 of Figure 8A, there is dividing, by a network device, a control part of a physical domain resource corresponding to one or more subframes into logical resources. As shown in step 820 there is reserving a first portion of the logical resources for control signaling. Then in step 830 there is reserving a second portion of the logical resources for a transmission request. At step 840 there is reserving a third portion of the logical resources for interference information.

In accordance with exemplary embodiments as described in the paragraph above, the first portion, the second portion and the third portion are located in a same subframe of the one or more subframes, and wherein the first portion is used for downlink control signaling.

In accordance with exemplary embodiments as described in the paragraph above, the first portion is reserved for downlink communication.

In accordance with exemplary embodiments as described in the paragraphs above, the second portion is used to signal an access request, and wherein the third portion is used to signal interference aware information of the transmission request from a receiver of the access request.

In accordance with exemplary embodiments as described in the paragraphs above, the second portion comprises a request to send message, and wherein the third portion comprises a clear to send message.

In accordance with the exemplary embodiments as described in the paragraphs above, wherein the first portion is allocated into a first subframe of the one or more subframes and the second portion and the third portion are allocated into a second subframe of the one or more subframes.

In accordance with exemplary embodiments as described in the paragraphs above, wherein the first portion and the second portion are allocated into a first subframe of the one or more subframes and the third portion is allocated into a second subframe of the one or more subframes.

In accordance with exemplary embodiments as described in the paragraphs above, the first portion is reserved for one of downlink and uplink control signaling.

In accordance with exemplary embodiments as described in the paragraphs above, the one of downlink and uplink control signaling is fixed in the first portion, and wherein a transmission opportunity for interference information is reserved in a data part of the one or more subframes.

In accordance with exemplary embodiments as described in the paragraphs above, the interference information comprises information associated with at least one of received signal power, received interference power, number of interfering signals and average signal throughput of an access request.

In accordance with exemplary embodiments as described in the paragraphs above, there is determining an interference level associated with the interference information comprising combining the information with an estimated channel gain from a transmitter to a receiver of the at least one user equipment.

In accordance with exemplary embodiments as described in the paragraphs above, the network device comprises a base station associated with the communication network.

In accordance with an exemplary embodiment of the invention as described above there is an apparatus comprising: means for dividing, by a network device [UE20 A2, UE21 A1, UE22 A1, UE25 A2, and/or eNB 24], a control part of a physical domain resource corresponding to one or more subframes into logical resources; means for reserving a first portion of the logical resources for control signaling; means for reserving a second portion of the logical resources for a transmission request; and means for reserving a third portion of the logical resources for interference information.

In an exemplary aspect of the invention according to the paragraph above, wherein the means for dividing, reserving, and communicating comprises a non-transitory computer readable medium [MEM 20B, 21B, 22B, 25B, and/or 24B] encoded with a computer program [PROG 20C, 21C, 22C, 25C, and/or 24C; and/or IAS processing 20G, 21G, 22G, 25G, and/or 24G] executable by at least one processor [DP 20A, 21A, 22A, 25A, and/or 24A].

Figure 8B operations which may be performed by a network device such as user device (e.g., UE20, UE21, UE22, and/or UE25 as in Fig. 2). As shown in step 870 of Figure 9B there is controlling receiving a control part of a physical domain resource corresponding to one or more subframes, wherein the control part is divided into logical resources, wherein a first portion of the logical resources is reserved for control signaling, wherein a second portion of the logical resources is reserved for a transmission request, wherein a third portion of the logical resources is reserved for interference information. Then in a non-limiting operation as shown at step 880 there may be communicating the one or more subframes a communication towards a network interface.

In accordance with exemplary embodiments as described in the paragraphs above, the first portion, the second portion and the third portion are located in a same subframe of the one or more subframes, and wherein the first portion is used for downlink control signaling.

In accordance with exemplary embodiments as described in the paragraphs above, the first portion is reserved for downlink communication.

In accordance with exemplary embodiments as described in the paragraphs above, the second portion is used to signal an access request, and wherein the third portion is used to signal interference aware information of the transmission request from a receiver of the access request.

In accordance with exemplary embodiments as described in the paragraphs above, the second portion comprises a request to send message, and wherein the third portion comprises a clear to send message.

In accordance with exemplary embodiments as described in the paragraphs above, the first portion is allocated into a first subframe of the one or more subframes and the second portion and the third portion are allocated into a second subframe of the one or more subframes.

In accordance with exemplary embodiments as described in the paragraphs above, the first portion and the second portion are allocated into a first subframe of the one or more subframes and the third portion is allocated into a second subframe of the one or more subframes.

In accordance with exemplary embodiments as described in the paragraphs above, the first portion is reserved for one of downlink and uplink control signaling.

In accordance with exemplary embodiments as described in the paragraphs above, the one of downlink and uplink control signaling is fixed in the first portion, and wherein a transmission opportunity for interference information is reserved in a data part of the one or more subframes.

In accordance with exemplary embodiments as described in the paragraphs above, the interference information comprises information associated with at least one of received signal power, received interference power, number of interfering signals, and average signal throughput of an access request.

In accordance with exemplary embodiments as described in the paragraphs above, there is determining an interference level associated with the interference information comprising combining the information with an estimated channel gain from a transmitter to a receiver of the at least one user equipment.

In accordance with an exemplary embodiment of the invention there is provided an apparatus comprising: means for receiving, for example by a network node [UE20 A2, UE21 A1, UE22 A1, UE25 A2, and/or eNB 24], a control part of a physical domain resource corresponding to one or more subframes, wherein the control part is divided into logical resources, wherein a first portion of the logical resources is reserved for control signaling, wherein a second portion of the logical resources is reserved for a transmission request, and wherein a third portion of the logical resources is reserved for interference information.

In accordance with another exemplary embodiment, there is provided an apparatus comprising: at least one processor and at least one memory including computer program code, where the at least one memory and the computer program code are configured, with the at least one processor, to cause the apparatus to at least:
divide, with a network device, a control part of a physical domain resource corresponding to one or more subframes into logical resources; reserve a first portion of the logical resources for control signaling; reserve a second portion of the logical resources for a transmission request; and reserve a third portion of the logical resources for interference information. The apparatus may be a base station, node, host or server or located in such an apparatus.

In yet another example, the apparatus may comprise means (24A, 24C, and/or 24G) for dividing, a control part of a physical domain resource corresponding to one or more subframes into logical resources; means (24A, 24C, and/or 24G) for reserving a first portion of the logical resources for control signaling; means (24A, 24C, and/or 24G) for reserving a second portion of the logical resources for a transmission request; and means (24A, 24C, and/or 24G) for reserving a third portion of the logical resources for interference information.

In accordance with another exemplary embodiment, there is provided an apparatus comprising: at least one processor; and at least one memory including computer program code, where the at least one memory and the computer program code are configured, with the at least one processor, to cause the apparatus to at least: control receiving a control part of a physical domain resource corresponding to one or more subframes, wherein the control part is divided into logical resources, wherein a first portion of the logical resources is reserved for control signaling, wherein a second portion of the logical resources is reserved for a transmission request, and wherein a third portion of the logical resources is reserved for interference information. The apparatus may be a user device, such as UE or located in such an apparatus.

In yet another example, the apparatus may comprise means (21A, 21C) for controlling receiving a control part of a physical domain resource corresponding to one or more subframes, wherein the control part is divided into logical resources, wherein a first portion of the logical resources is reserved for control signaling, wherein a second portion of the logical resources is reserved for a transmission request, and wherein a third portion of the logical resources is reserved for interference information.

In an exemplary aspect of the invention according to the paragraph above, the means for receiving comprises a non-transitory computer readable medium [MEM 20B, 21B, 22B, 25B, and/or 24B] encoded with a computer program [PROG 20C, 21C, 22C, 25C, and/or 24C; and/or IAS processing 20G, 21G, 22G, 25G, and/or 24G] executable by at least one processor [DP 20A, 21A, 22A, 25A, and/or 24A].

The apparatus may be, include or be associated with at least one software application, module, unit or entity configured as arithmetic operation, or as a computer program or portions thereof (including an added or updated software routine), executed by at least one operation processor, unit or module. Computer programs, also called program products or simply programs, including software routines, applets and/or macros, may be stored in any apparatus-readable data storage medium. A computer program product may comprise one or more computer-executable components which, when the program is run, are configured to carry out embodiments described above by means of Figures 8A and/or 8B. Additionally, software routines may be downloaded into the apparatus.

The apparatus, such as a node or user device, or a corresponding component, may be configured as a computer or a microprocessor, such as single-chip computer element, or as a chipset, including or being coupled to a memory for providing storage capacity used for software or arithmetic operation(s) and at least one operation processor for executing the software or arithmetic operation(s).

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of embodiments of this invention could be used to advantage without the corresponding use of other features. As such, the foregoing description should be considered as merely illustrative of the principles of the invention, and not in limitation thereof.

## Claims

1. A method comprising,
dividing (810), by a network device, a control part of a physical domain resource corresponding to one or more subframes into logical resources; the method further comprising:
reserving (820) a first portion of the logical resources for control signaling;
reserving (830) a second portion of the logical resources for a transmission request; **characterized in that** the method further comprises: reserving (840) a third portion of the logical resources for interference information signaling from receivers of the at least one transmission request.

2. The method according to claim 1, wherein the first portion, the second portion and the third portion are located in a same subframe of the one or more subframes, and wherein the first portion is used for downlink control signaling.

3. The method according to claim 2, wherein the first portion is reserved for downlink communication or uplink communication.

4. The method according to claim 1, wherein the first portion and the second portion are allocated into a first subframe of the one or more subframes and the third portion is allocated into a second subframe of the one or more subframes.

5. The method according to any one of claim 1 or 4 wherein the one of downlink and uplink control signaling is fixed in the first portion, and wherein a transmission opportunity for interference information is reserved in a data part of the one or more subframes.

6. The method according to claim 1, wherein the one or more subframes are used to convey interference information comprising information associated with at least one of: received signal power, received interference power, number of interfering signals, and average signal throughput of an access request.

7. A method comprising,
controlling (870), by a user device, receiving a control part of a physical domain resource corresponding to one or more subframes, wherein the control part is divided into logical resources, wherein a first portion of the logical resources is reserved for control signaling,
wherein a second portion of the logical resources is reserved for a transmission request, **characterized in that** a third portion of the logical resources is reserved for interference information signaling from receivers of the at least one transmission request..

8. The method according to claim 7, wherein the first portion, the second portion and the third portion are located in a same subframe of the one or more subframes, and wherein the first portion is used for downlink control signaling.

9. The method according to claim 7 or 8, wherein the first portion is reserved for downlink communication or uplink communications.

10. The method according to any one of claims 7 to 9, wherein the second portion is used to signal an access request, and wherein the third portion is used to signal interference aware information of the transmission request from a receiver of the access request.

11. The method according to any one of claims 7 to 10, wherein the second portion comprises a request to send message, and wherein the third portion comprises a clear to send message.

12. The method according to claims 7 to 11, wherein the first portion is allocated into a first subframe of the one or more subframes and the second portion and the third portion are allocated into a second subframe of the one or more subframes.

13. The method according to claim 7, wherein the one or more subframes are used to convey interference information comprises information associated with at least one of received signal, received interference power, number of interfering signals and average signal throughput of an access request.

14. An apparatus comprising means configured to carry out the method according to any one of claims 1 to 6 or 7 to 13.

15. A computer program product for a computer, comprising software code portions for performing the steps of any of claims 1 to 6 or 7 to 13, when said product is run on the computer.

## Patentansprüche

1. Verfahren, umfassend:
Aufteilen (810), durch eine Netzwerkvorrichtung, eines Steuerteils eines Betriebsmittels der physikalischen Domäne korrespondierend mit einer oder mehreren Teilrahmen in logische Betriebsmittel, das Verfahren ferner umfassend:
Reservieren (820) eines ersten Abschnitts der logischen Betriebsmittel für Steuersignalisierung;
Reservieren (830) eines zweiten Abschnitts der logischen Betriebsmittel für eine Übertragungsanforderung;
**dadurch gekennzeichnet, dass** das Verfahren ferner umfasst:
Reservieren (840) eines dritten Abschnitts der logischen Betriebsmittel für Interferenzinformationssignalisierung von Empfängern der mindestens einen Übertragungsanforderung.

2. Verfahren nach Anspruch 1, wobei der erste Abschnitt, der zweite Abschnitt und der dritte Abschnitt in einem gleichen Teilrahmen des einen oder der mehreren Teilrahmen angeordnet sind und wobei der erste Abschnitt für Abwärtsstrecken-Steuersignalisierung verwendet wird.

3. Verfahren nach Anspruch 2, wobei der erste Abschnitt für Abwärtsstrecken-Kommunikation oder Aufwärtsstrecken-Kommunikation reserviert ist.

4. Verfahren nach Anspruch 1, wobei der erste Abschnitt und der zweite Abschnitt in einen ersten Teilrahmen des einen oder der mehreren Teilrahmen zugeteilt sind und der dritte Abschnitt in einen zweiten Teilrahmen des einen oder der mehreren Teilrahmen zugeteilt ist.

5. Verfahren nach einem der Ansprüche 1 oder 4, wobei die eine der Abwärtsstrecken- und Aufwärtsstrecken-Steuersignalisierung in dem ersten Abschnitt fixiert ist und wobei eine Übertragungsmöglichkeit für Interferenzinformationen in einem Datenteil des einen oder der mehreren Teilrahmen reserviert ist.

6. Verfahren nach Anspruch 1, wobei der eine oder die mehreren Teilrahmen verwendet werden, Interferenzinformationen zu befördern, die mit mindestens einem von Folgendem assoziierte Informationen umfassen: empfangene Signalleistung, empfangene Interferenzleistung, Anzahl interferierender Signale und durchschnittlicher Signaldurchsatz einer Zugriffsanforderung.

7. Verfahren, umfassend:
Steuern (870), durch eine Benutzervorrichtung, des Empfangens eines Steuerteils eines Betriebsmittels der physikalischen Domäne korrespondierend mit einem oder mehreren Teilrahmen, wobei der Steuerteil in logische Betriebsmittel aufgeteilt ist,
wobei ein erster Abschnitt der logischen Betriebsmittel für Steuersignalisierung reserviert ist,
wobei ein zweiter Abschnitt der logischen Betriebsmittel für eine Übertragungsanforderung reserviert ist, **dadurch gekennzeichnet, dass**
ein dritter Abschnitt der logischen Betriebsmittel für Interferenzinformationssignalisierung von Empfängern der mindestens einen Übertragungsanforderung reserviert ist.

8. Verfahren nach Anspruch 7, wobei der erste Abschnitt, der zweite Abschnitt und der dritte Abschnitt in einem gleichen Teilrahmen des einen oder der mehreren Teilrahmen angeordnet sind und wobei der erste Abschnitt für Abwärtsstrecken-Steuersignalisierung verwendet wird.

9. Verfahren nach Anspruch 7 oder 8, wobei der erste Abschnitt für Abwärtsstrecken-Kommunikation oder Aufwärtsstrecken-Kommunikation reserviert ist.

10. Verfahren nach einem der Ansprüche 7 bis 9, wobei der zweite Abschnitt verwendet wird, eine Zugriffsanforderung zu signalisieren, und wobei der dritte Abschnitt verwendet wird, interferenzbewusste Informationen der Übertragungsanforderung von einem Empfänger der Zugriffsanforderung zu signalisieren.

11. Verfahren nach einem der Ansprüche 7 bis 10, wobei der zweite Abschnitt eine Anforderung zum Senden einer Nachricht umfasst und wobei der dritte Abschnitt eine Freigabe zum Senden einer Nachricht umfasst.

12. Verfahren nach den Ansprüchen 7 bis 11, wobei der erste Abschnitt in einen ersten Teilrahmen des einen oder der mehreren Teilrahmen zugeteilt ist und der zweite Abschnitt und der dritte Abschnitt in einen zweiten Teilrahmen des einen oder der mehreren Teilrahmen zugeteilt sind.

13. Verfahren nach Anspruch 7, wobei der eine oder die mehreren Teilrahmen verwendet werden, Interferenzinformationen zu befördern, die mit mindestens einem eines empfangenen Signals, einer empfangenen Interferenzleistung, einer Anzahl interferierender Signale und einem durchschnittlichen Signaldurchsatz einer Zugriffsanforderung assoziiert sind.

14. Vorrichtung, umfassend Mittel, die konfiguriert sind, das Verfahren nach einem der Ansprüche 1 bis 6 oder 7 bis 13 auszuführen.

15. Computerprogrammprodukt für einen Computer, umfassend Softwarecodeabschnitte zum Durchführen der Schritte nach einem der Ansprüche 1 bis 6 oder 7 bis 13, wenn das Produkt auf dem Computer ausgeführt wird.

## Revendications

1. Procédé comprenant l'étape suivante :
diviser (810), par un dispositif de réseau, une partie de contrôle d'une ressource de domaine physique correspondant à une ou plusieurs sous-trames, en ressources logiques ;
le procédé comprenant en outre les étapes suivantes :
réserver (820) une première partie des ressources logiques pour la signalisation de contrôle ;
réserver (830) une deuxième partie des ressources logiques pour une demande de transmission ;
**caractérisé en ce que** le procédé comprend en outre l'étape suivante :
réserver (840) une troisième partie des ressources logiques pour la signalisation d'informations d'interférences provenant des récepteurs de l'au moins une demande de transmission.

2. Procédé selon la revendication 1, dans lequel la première partie, la deuxième partie et la troisième partie sont situées dans une même sous-trame des une ou plusieurs sous-trames, et dans lequel la première partie est utilisée pour la signalisation de contrôle de liaison descendante.

3. Procédé selon la revendication 2, dans lequel la première partie est réservée à la communication en liaison descendante ou la communication en liaison montante.

4. Procédé selon la revendication 1, dans lequel la première partie et la deuxième partie sont allouées dans une première des une ou plusieurs sous-trames et la troisième partie est allouée dans une seconde sous-trame des une ou plusieurs sous-trames.

5. Procédé selon l'une quelconque des revendications 1 ou 4, dans lequel une des signalisations parmi la signalisation de contrôle de liaison descendante et la signalisation de contrôle de liaison montante est fixée dans la première partie, et dans lequel une possibilité de transmission d'informations d'interférences est réservée dans une partie de données des une ou plusieurs sous-trames.

6. Procédé selon la revendication 1, dans lequel les une ou plusieurs sous-trames sont utilisées pour acheminer des informations d'interférences comprenant des informations associées à au moins une caractéristique parmi les suivantes :
la puissance du signal reçu, la puissance des interférences reçues, le nombre de signaux brouilleurs et le débit moyen du signal d'une demande d'accès.

7. Procédé comprenant les étapes suivantes :
contrôler (870), par un dispositif utilisateur, la réception d'une partie de contrôle d'une ressource de domaine physique correspondant à une ou plusieurs sous-trames, où la partie de contrôle est divisée en ressources logiques,
où une première partie des ressources logiques est réservée à la signalisation de contrôle,
où une deuxième partie des ressources logiques est réservée à une demande de transmission,
**caractérisé en ce que**
une troisième partie des ressources logiques est réservée à la signalisation d'informations d'interférences provenant des récepteurs de l'au moins une demande de transmission.

8. Procédé selon la revendication 7, dans lequel la première partie, la deuxième partie et la troisième partie sont situées dans une même sous-trame des une ou plusieurs sous-trames, et où la première partie est utilisée pour la signalisation de contrôle de liaison descendante.

9. Procédé selon la revendication 7 ou la revendication 8, dans lequel la première partie est réservée à la communication en liaison descendante ou la communication en liaison montante.

10. Procédé selon l'une quelconque des revendications 7 à 9, dans lequel la deuxième partie est utilisée pour signaler une demande d'accès, et dans lequel la troisième partie est utilisée pour signaler des informations sensibles aux interférences de la demande de transmission provenant d'un récepteur de la demande d'accès.

11. Procédé selon l'une quelconque des revendications 7 à 10, dans lequel la deuxième partie comprend un message Demande pour émettre, et dans lequel la troisième partie comprend un message Prêt à émettre.

12. Procédé selon les revendications 7 à 11, dans lequel la première partie est allouée dans une première sous-trame des une ou plusieurs sous-trames et la deuxième partie et la troisième partie sont allouées dans une seconde sous-trame des une ou plusieurs sous-trames.

13. Procédé selon la revendication 7, dans lequel les une ou plusieurs sous-trames sont utilisées pour acheminer des informations d'interférences comprenant des informations associées à au moins une caractéristique parmi les suivantes : le signal reçu, la puissance des interférences reçues, le nombre de signaux brouilleurs et le débit moyen du signal d'une demande d'accès.

14. Appareil comprenant des moyens configurés pour exécuter le procédé selon l'une quelconque des revendications 1 à 6 ou 7 à 13.

15. Produit programme informatique destiné à un ordinateur, comprenant des parties de code logiciel pour exécuter les étapes de l'une quelconque des revendications 1 à 6 ou 7 à 13, lorsque ledit produit est exécuté sur l'ordinateur.
